# NEUE EUROPÄISCHE PATENTSCHRIFT

(11) **EP 0 105 219 B2**
(45) Veröffentlichungstag und Bekanntmachung des Hinweises auf die Entscheidung über den Einspruch: **20.01.1993**
(45) Hinweis auf die Patenterteilung: 01.06.1988
(21) Anmeldenummer: 83108798.6
(22) Anmeldetag: 07.09.1983
(51) Int. Cl.: B60T 8/00, B60T 17/22

(54) **Steuer- oder Regelsystem**
Control or regulation system
Système de commande ou de réglage

(30) Priorität: 02.10.1982 DE 3236535
(43) Veröffentlichungstag der Anmeldung: 11.04.1984
(73) Patentinhaber: ROBERT BOSCH GMBH, 70442 Stuttgart (DE)
(72) Erfinder: Leiber, Heinz, D-7141 Oberriexingen (DE)

(56) Entgegenhaltungen:
- EP-A- 0 025 714
- GB-A- 2 021 240
- US-A- 4 150 686
- US-A- 4 399 836
- AUTOMOTIV INDUSTRIES, October 1, 1972, Seiten 29-34, James B. Pond: "Goodrich goes on Highway with anti-skid"

## Beschreibung

Die Erfindung betrifft ein Steuer- oder Regelsystem mit den Merkmalen des Oberbegriffs des Anspruchs 1.

Z.B. bei Antiblockierregelsystemen für Fahrzeuge ist es bekannt, die Auswerteschaltung im Fahrgastraum unterzubringen und die den Rädern zugeordneten Sensoren und die Betätigungsventile für die Bremsdruckvariation über Kabel und einen oder zwei Stecker mit der Auswerteschaltung zu verbinden. Es ist auch schon bekannt, die Auswerteschaltung in der Nähe der Betätigungsventile anzuordnen. Es muss aber auch hier nach wie vor die gleiche Anzahl von Steckverbindungen verwendet werden, die Ursache von Fehlern sind. Diese Überlegungen gelten auch für andere Regel- oder Steuergeräte.

Durch die G-A-2 021 240 ist es bekannt, Ventilteile wenigstens eines Magnetventils in einem gesonderten Block unterzubringen und da wenigstens eine Ventil über wenigstens einen von einem Elektromagnet verschiebbaren Stössel zu betätigen. Eine Auswerteschaltung ist von dem Block entfernt angeordnet. Dies hat ebenfalls den Nachteil, dass viele Kabel und Stecker zum elektrischen Verbinden der Komponenten nötig sind.

Durch den Artikel "Goodrich goes On-Highway with Anti-Skid", Automotive Industries, October 1, 1972, Seiten 29 bis 34 ist ein Steuersystem bekannt, bei dem in einem gemeinsamen Gehäuse zwei getrennte Kammern für eine Auswerteschaltung und ein vollständig darin angeordnetes Magnetventil vorgesehen sind. Das gemeinsame Gehäuse ist mit Kanälen für das zu steuernde Medium versehen.

Durch die US-A-4 150 686 ist eine Steuereinrichtung bekannt mit einem Aktuator, mit einer an diesen angeflanschten Steuerventilanordnung und mit auf diese Steuerventilanordnung aufgesetzten Servoventilen und einer Auswerteeinrichtung, die gemeinsam mittels einer Abdeckhaube abgedeckt sind. Diese Steuereinrichtung hat den Nachteil, dass die Elektromagnete der Servoventile über Kabel mit der Auswerteschaltung verbunden sind.

Das erfindungsgemässe Steuer- und Regelsystem mit den kennzeichnenden Merkinalen des Hauptanspruchs hat den Vorteil, dass zumindests ein Teil der Kontaktstellen entfällt. Weiterhin wird durch die Zusammenfassung Gehäuseaufwand und Halterung dafür eingespart. Ausserdem ist beispielsweise die Stellung eines über das Regelsystem und ein Ventil ansteuerbaren Betätigungskolbens oder eines Messkolbens überwachbar, wenn in technisch günstiger Weise deren Stellung bzw. Stellungsänderung in das Gehäuse hinein zu dem dort befestigten Stellungsgeber übertragen wird.

Das kennzeichnende Merkmal des Anspruchs 2 hat den Vorteil, dass der Stössel eine direkte mechanische Betätigung des Stellungsgebers ermöglicht.

Die kennzeichnenden Merkmale des Anspruchs 3 haben den Vorteil, dass zur Betätigung des Stellungsgebers kein in das Gehäuse hineinragender Stössel und somit auch keine Stösseldurchführungs- öffnung im Gehäuse nötig sind. Dies vereinfacht das Zusammenfügen der einzelnen Komponenten. Diese kennzeichnenden Merkmale sind besonders vorteilhaft anwendbar z,B. bei Füllstandsmessern von Hydraulischen Fahrzeugbremsanlagen, denn dort stehen zum Verschieben von abgedichteten Stösseln wegen der Kleinheit von verwendeten Messschwimmern keine ausreichenden Verschiebekräfte zur Verfügung.

Der Grundkörper, mit dem das Gehäuse an den Block angesetzt ist und an dem die Elektromagnete und gegebenenfalls Geber befestigt sind besteht insbesondere aus Metall. An diesem ist auch wenigstens die eine Leiterplatte befestigt, die der Verschaltung der sich im Gehäuse befindlichen Komponenten z.B. auch von Relais dient. An dem Grundkörper werden worzugsweise auch Stege vorgesehen, die die Auswerteschaltung, die als Hybridbaustein aufgebaut sein kann, tragen, bzw. an denen die benötigten Leistungstransistoren angebracht sind. Durch diese Ausbildung wird für alle Komponenten eine gute Wärmeabfuhr garantiert. Der oder die Stellmagnete können von einer Abdeckhaube umgeben sein, die der Wärmeabfuhr und/oder der magnetischen Abschirmung dient.

Von besonderem Interesse ist die erfindungsgemässe Ausbildung bei mit einem Antiblockierregelsystem kombinierten hydraulischen Bremsverstärker und einer Integration dieser Teile.

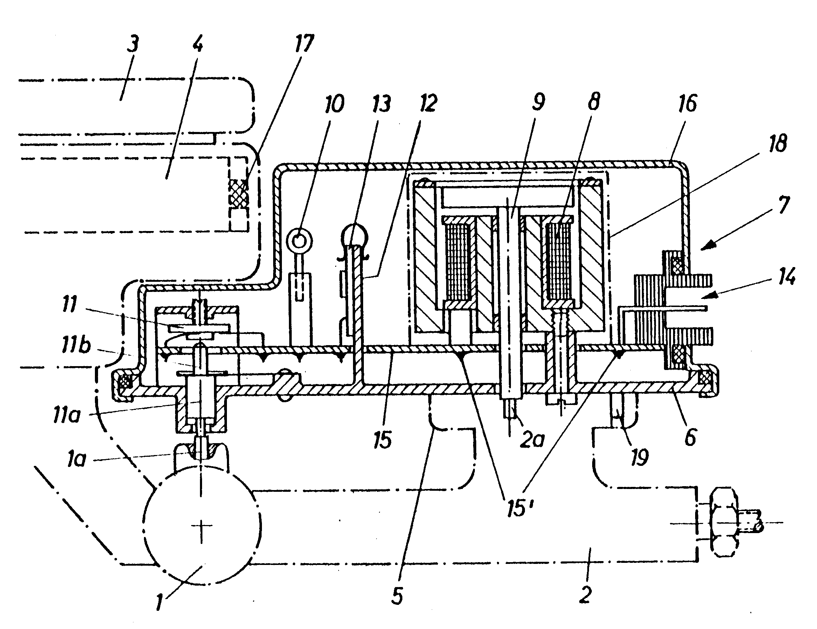

Anhand der Zeichnung wird ein Ausführungsbeispiel der Erfindung erläutert.

Dort ist mit 1 ein Bremskraftverstärker eines Kraftfahrzeuges bezeichnet, an dem ein Ventilblock2 seitlich angebaut ist, dessen nicht dargestellte Ventile zur Antiblockierregelung benutzt werden. Mit 3 ist der Deckel des Vorratsbehälters für Bremsflüssigkeit bezeichnet und 4 sei der Vorratsbehälter.

Auf einem Flansch 5 des Ventilblocks 2 ist eine Grundplatte 6 eines Gehäuses 7 aufgesetzt. In ihm - und auf der Grundplatte befestigt - sind ein Elektromagnet 8 mit einem Ankerstössel 9 und Stellungsgeber 10 und 11 angeordnet. Auf einem Steg 12 ist eine als Hybridbaustein 13 aufgebaute Auswerteschaltung befestigt. An einem Steckanschluss 14 werden die Messwertgeber für die Radgeschwindigkeit angeschlossen. Die Verbindungen zwischen den einzelnen Komponenten auf der Grundplatte 6 werden durch Leitungszüge einer gedruckten Leiterplatte 15 hergestellt. Entsprechende Lötanschlüsse sind mit 15' bezeichnet.

Der Ankerstössel 9 steht mit einem nur angedeuteten Ventilstössel 2a in mechanischer Verbindung und betätigt bei Erregung das Ventil. Aus dem Bremskraftverstärker 1 ragt ein Stössel 1a heraus, der z.B. über eine Schräge eines Kolbens verschoben wird. Er steht mit einem in der Grundplatte 6 gelagerten Stössel 11a in Verbindung, der an seinem Ende einen Permanentmagneten 11 b trägt und hierdurch bei seiner Annäherung oder Entfernung im Stellungsgeber 11 (z.B. ein Hall-Element) unterschiedliche Signale erzeugt. Der Stellungsgeber 10 wird durch einen Deckel 16 hindurch von einem Permanentmagneten 17 beeinflusst, der mit dem Schwimmer des Vorratsbehälters verbunden sein soll und von diesem bewegt wird. Bei einer entsprechenden Stellung dieses Magneten 17 erzeugt der Geber 10 (z.B. ein Reed Kontakt) ein Signal.

Über den Steckanschluss 14 einkommende Radgeschwindigkeitssignale werden über die Leiter der Leiterplatte 15 zur Auswerteschaltung 13 übertragen, dort ausgewertet und in Steuerbefehle für den (und evtl. weitere) Elektromagnete 8 umgesetzt und diesem über die Leiter der Leiterplatte 15 zugeführt. Hierdurch wird ein Ventil im Block 2 betätigt.

Über den Weggeber 11 wird z.B.- wieder über die Leiterplatte übertragen - der Auswerteschaltung signalisiert, dass der Druck der Druckquelle (Pumpe und Speicher) des Bremssystems keinen ausreichenden Druck mehr liefert; über ein nichtgezeigtes, auf der Platte 6 aufgebrachtes Sicherheitsrelais wird dann z.B. das Antiblockierregelsystem abgeschaltet. Auch ein Absinken des Vorrats an Bremsflüssigkeit im Behälter 4 kann durch ein entsprechendes Signal des Gebers 10 eine solche Abschaltung auslösen oder eine Warnung einschalten.

In der Zeichnung ist noch eine Abdeckhaube 18 für den Elektromagneten 8 angedeutet, die zur Wärmeabführung und Abschirmung dienen kann.

Bei der Montage des Gehäuses 6, 16 dient als Bezugsfläche der Flansch 5 des Ventilblocks 2. Zwischen dem Boden der Platte 6 und dem oberen Ende des Bremskraftverstärkers muss sich dabei ein bestimmterAbstand ergeben. Der Elektromagnet 8 kann dann seinerseits justiert werden. Um eine Vertauschung unterschiedlicher Systeme zu verhindern, kann am Gehäuse 6/16 ein Codierstift 19 und im Block eine entsprechende Öffnung vorgesehen sein.

## Patentansprüche

1. Steuer- oder Regelsystem enthaltend wenigstens einen Geber (10, 11) Steuerbefehl- und/oder Messwertgeber), eine elektronische Auswerteschaltung (13) für die Gebersignale und wenigstens ein Magnetventil, das von dieser elektronischen Auswerteschaltung (13) angesteuert wird und in ein hydraulisches oder pneumatisches Betätigungssystem (1, 2) eingeschaltet ist, wobei die Auswerteschaltung (13) in der Nähe des Ventils angeordnet ist, dadurch gekennzeichnet, dass die Auswerteschaltung (13) und der Elektromagnet oder die Elektromagnete (8) des Magnetventils bzw. der Magnetventile in einem gemeinsamen durch einen Grundhörper (6) und einen Deckel (16) gebildeten Gehäuse (6/16) untergebracht und innerhalb des Gehäuses (6/16) miteinander mittels wenigstens einer Leiter platte (15) verschaltet sind, wobei die Ventilteile des wenigstens einen Magnetventils in einem gesonderten Block (2) untergebracht sind und das gemeinsame Gehäuse (6/16) an diesen Block (2) angesetzt und das wenigstens eine Ventil über enigstens einen das gemeinsame Gehäuse (6/6) durchdringenden, von dem wenigstens einen Elektromagnet (8) verschiebbaren Stössel (9) betätigbar ist, und wobei derwenigstens eine im gemeinsamen Gehäuse (6/16) angeordnete Geber ein Stellungsgeber(10, 11) ist, der vorzugsweise vom hydraulischen oder pneumatischen System beeinflussbar ist.

2. Steuer- oder Regelsystem nach Anspruch 1, dadurch gekennzeichnet, dass der Stellungsgeber (11) durch Verschiebung eines sich durch die Gehäusewand (6) erstreckenden Stössels (11a) beeinflussbar ist.

3. Steuer- oder Regelsystem nach Anspruch 1, dadurch gekennzeichnet, dass der Stellungsgeber (10) durch eine Bewegung eines ausserhalb des Gehäuses (6/16 angeordneten, insbesondere mit dem hydraulischen oder pneumatischen System verbundenen Magneten (17) beeinflussbar ist.

4. Steuer- oder Regelsystem nach einem der Ansprüche 1 bis 3, dadurch gekennzeichnet, dass der Grundkörper (6), mit dem das Gehäuse(6/16) es an den Block (2) angesetzt ist und an dem die Elektromagnete (8) und gegebenenfalls die Geber (10, 11) befestigt sind, insbesondere aus Metall besteht.

5. Steuer- oder Regelsystem nach Anspruch 4, dadurch gekennzeichnet, dass an dem Grundkörper (6) die wenigstens eine Leiterplatte (15) zur Verschaltung der Komponenten (8,10,11,13,14) befestigt ist.

6. Steuer- oder Regelsystem nach Anspruch 4 oder 5, dadurch gekennzeichnet, dass der Grundkörper (6) Trägerstege (12) Befestigung der als Hybridbaustein aufgebauten Auswerteschaltung (13) und/oder zur Anbringung von Leistungstransistoren aufweist.

7. Steuer- oder Regelsystem nach einem der Ansprüche 1 bis 6, dadurch gekennzeichnet, dass der Elektromagnet (8) eine Abdeckhaube (18) zur Wärmeableitung und/oder magnetischen Abschirmung aufweist.

8. Steur- oder Regelsystem nach einem derAnsprüche 1 bis 7, gekennzeichnet durch seine Anwendung als Antiblockierregelsystem.

## Claims

1. Control or regulation system comprising at least one transducer (10, 11) (control command transducer and/or measured valve transducer), an electronic evaluation circuit (13) for the transducer signals and at least one solenoid valve which is controlled by this electronic evaluation circuit (13) and is connected into a hydraulic or pneumatic actuation system (1, 2), in which arrangement the evaluation circuit (13) is arranged in the proximity of the valve, characterised in that the evaluation circuit (13) and the solenoid or solenoids (8) of the solenoid valve or solenoid valves are accommodated in a common housing (6/16) formed by a basic element (6) and a cover (16), and interconnected within the housing (6/16) by means of at least one printed circuit board (15), in which arrangement the valve parts of the at least one solenoid valve are accommodated in a separate block (2) and the common housing (6/16) is annexed to this block (2) and the at least one valve is actuable by at least one push rod (9) penetrating the common housing (6/16) and slidable by the at least one solenoid (8), and in which arrangement the at least one transducer arranged in the common housing (6/16) is a position transducer (10, 11) which is preferably influenceable by the hydraulic or pneumatic system.

2. Control or regulation system according to Claim 1, characterised in that the position transducer (11) is influenceable by the sliding of a push rod (11 a) extending through the housing wall (6).

3. Control or regulation system according to Claim 1, characterised in that the position transducer (10) is influenceable by a movement of a magnet (17) arranged outside the housing (6/16), particularly connected to the hydraulic or pneumatic system.

4. Control or regulation system according to one of Claims 1 to 3, characterised in that the basic element (6), by which the housing (6/16) it [sic] is annexed to the block (2) and to which the solenoids (8) and optionally the transducers (10, 11) are secured, is composed, in particular, of metal.

5. Control or regulation system according to Claim 4, characterised in that the at least one printed circuit board (15) for interconnecting the components (8, 10, 11, 13, 14) is secured to the basic element (6).

6. Control or regulation system according to Claim 4 or 5, characterised in that the basic element (6) exhibits supporting webs (12) for securing the evaluation circuit (13) constructed as a hybrid module and/or for the attachment of power transistors.

7. Control or regulation system according to one of Claims 1 to 6, characterised in that the solenoid (8) exhibits a covering hood (18) for heat dissipation and/or magnetic shielding.

8. Control or regulation system according to one of Claims 1 to 7, characterised by its application as an anti-locking regulation system.

## Revendications

1. Système de commande ou de réglage compre- nantau moins un transmetteur (10,11) (transmetteur d'ordre de commande et/ou de valeur de mesure), un circuit électronique d'exploitation (13), pour les signaux de transmetteur et au moins une soupape magnétique, qui est commandée par ce circuit d'exploitation (13) électronique et intercalée dans un système d'actionnement (1, 2) hydraulique ou pneumatique, le circuit d'exploitation (13) étant disposé au voisinage de la soupape , caractérisé en ce que le circuit d'exploitation (13) et l'électro-aimant (8), ou bien les électro-aimants (8) de la soupape ou des soupapes magnétiques sont logés dans un carter commun (6, 16) constitué d'un corps de base (6) et d'un couvercle (16) et branchés ensemble à l'intérieur du carter (6, 16) au moyen d'au moins une plaquette de circuits imprimés (15), les parties de soupapes d'au moins une soupape magnétique étant logées dans un bloc spécial (2) et l'ensemble du carter (6, 16) étant placé sur ce bloc (2) et au moins une soupape pouvant être actionnée par au moins une tige-poussoir (9) traversant le carter commun (6, 16) et pouvant être déplacée par au moins un électro-aimant (8), et le transmetteur qui est au moins au nombre de un, étant un transmetteur de position (10, 11) disposé dans le carter commun (6, 16) et qui peut avantageusement être influençable par un système hydraulique ou pneumatique.

2. Système de commande ou de réglage selon la revendication 1, caractérisé en ce que le transmet- teurde position (11) est influençable par le déplacement d'une tige-poussoir (11a), qui s'étend à travers la paroi de carter (6).

3. Système de commande ou de réglage selon la revendication 1, caractérisé en ce que le transmetteur de position (10) est influençable par un mouvement d'un aimant (17) disposé à l'extérieur du carter (6, 16) et relié notamment au système hydraulique ou bien pneumatique.

4. Système de commande ou de réglage selon l'une des revendications 1 à 3, caractérisé en ce que le corps de base (6) par lequel le carter (6, 16) est appliqué sur le bloc (2) et auquel les électro-aimants (8) et, le cas échéant, les transmetteurs (10, 11) sont fixés, est notamment en métal.

5. Système de commande ou de réglage selon la revendication 4, caractérisé en ce qu'au moins une plaquette à circuits imprimés (15) est fixée sur le corps de base (6), pour la connexion des composants (8, 10, 11, 13, 14).

6. Système de commande ou de réglage selon la revendication 4 ou 5, caractérisé en ce que le corps de base (6) possède des nervures de support (12) pour la fixation du circuit d'exploitation (13) construit en éléments hybrides et/ou pour le montage de transistors de puissance.

7. Système de commande ou de réglage selon l'une des revendications 1 à 6, caractérisé en ce que l'électro-aimant (8) possède un capot de recouvrement (18), pour l'évacuation de la chaleur et/ou le blindage magnétique.

8. Système de commande ou de réglage selon l'une des revendications 1 à 7, caractérisé par sa mise en oeuvre sous la forme de système de régulation antiblocage.
